# EUROPÄISCHE PATENTSCHRIFT

(11) **EP 3 336 490 B1**
(45) Veröffentlichungstag und Bekanntmachung des Hinweises auf die Patenterteilung: **10.08.2022**
(21) Anmeldenummer: 16204041.4
(22) Anmeldetag: 14.12.2016
(51) Int. Cl.: B64C 39/02, G01C 21/08, G05D 1/10, G01S 19/42, G01S 19/49

(54) **UNBEMANNTES FLUGGERÄT UND VERFAHREN ZUM POSITIONIEREN EINES UNBEMANNTEN FLUGGERÄTS**
UNMANNED AERIAL VEHICLE AND METHOD FOR POSITIONING AN UNMANNED AERIAL VEHICLE
VÉHICULE AÉRIEN SANS PILOTE ET PROCÉDÉ DE POSITION D'UN VÉHICULE AÉRIEN SANS PILOTE

(43) Veröffentlichungstag der Anmeldung: 20.06.2018
(73) Patentinhaber: mdGroup Germany GmbH, 57072 Siegen (DE)
(72) Erfinder: Kessler, Christopher, 57250 Netphen (DE)
(74) Vertreter: Glawe, Delfs, Moll

(56) Entgegenhaltungen:
- US-A1- 2004 044 477
- US-A1- 2010 004 798
- US-A1- 2015 205 301

## Beschreibung

Die Erfindung betrifft ein Verfahren zum Positionieren eines unbemannten Fluggeräts, dessen Ist-Position von einer Soll-Position abweicht. Die Erfindung betrifft außerdem ein zum Durchführen des Verfahrens geeignetes unbemanntes Fluggerät.

Bei unbemannten Fluggeräten gibt es viele Einsatzmöglichkeiten, bei denen es gewünscht ist, dass das unbemannte Fluggerät in einer festen vorgegebenen Position verbleibt. Dazu gehören beispielsweise Kameraaufnahmen, wenn ein bestimmter Ablauf aus einem definierten Blickwinkel heraus aufgezeichnet werden soll.

Bei Einsätzen dieser Art stellt sich das Problem, dass es nicht ganz einfach ist, ein unbemanntes Fluggerät kontinuierlich in einer festen Position zu halten. So unterliegen unbemannte Fluggeräte beispielsweise einer laufenden Abdrift unter dem Einfluss von Wind. Dass eine Abweichung zwischen der Ist-Position und der Soll-Position vorliegt, kann leicht aus einer Information über die aktuelle Position abgeleitet werden.

Nicht ganz einfach ist es festzustellen, in welche Richtung das unbemannte Fluggerät in Bewegung versetzt werden muss, um sich wieder an die Soll-Position anzunähern. Aus einer Positionsinformation kann zwar durch Differenzbildung eine absolute Information über die Richtung von der Ist-Position zur Soll-Position gewonnen werden, jedoch keine Richtungsinformation, in der die gegenwärtige Ausrichtung des unbemannten Fluggeräts berücksichtigt ist.

Dokument US 2015/0205301 A1 stellt ein Flugobjekt vor, dass automatisch eine relative Position zu einem Ziel einhält. Das Flugobjekt kann sich mit dem Ziel bewegen, um im Wesentlichen die gleiche relative Position zu dem Ziel einzuhalten. Dokument US 2004/0044477 A1 stellt ein Verfahren zur Korrektur eines Positionsfehlers in einem Navigationssystem vor, um die Positionsmessung eines beweglichen Objektes auf einer digitalen Landkarte besser zu verorten.

Der Erfindung liegt die Aufgabe zugrunde, ein unbemanntes Fluggerät sowie ein Verfahren zum Positionieren eines unbemannten Fluggeräts vorzustellen, mit denen das unbemannte Fluggerät gezielt von einer Ist-Position in eine Soll-Position bewegt werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird zunächst festgestellt, dass die Ist-Position des Fluggeräts von einer Soll-Position abweicht. Das unbemannte Fluggerät wird anhand einer ersten Richtungsinformation in Richtung der Soll-Position in eine Korrekturbewegung versetzt. Nach Beginn der Korrekturbewegung wird eine zweite Richtungsinformation gewonnen. Die erste Richtungsinformation wird anhand der zweiten Richtungsinformation korrigiert. Die Korrekturbewegung wird durch einen Steuerbefahl ausgelöst wird, der von einem Positioniermodul des Fluggeräts zu einer Steuereinheit des Fluggeräts geleitet wird.

Das erfindungsgemäße Verfahren beruht auf dem Gedanken, die Richtungsinformation für die Annäherung des unbemannten Fluggeräts an die Soll-Position in einem zweistufigen Ablauf zu gewinnen. Aus der Ist-Position des unbemannten Fluggeräts heraus, wird die Korrekturbewegung anhand einer ersten Richtungsinformation eingeleitet, so dass das unbemannte Fluggerät ungefähr in Richtung der Soll-Position in Bewegung versetzt wird. Die erste Richtungsinformation ist aber möglicherweise nicht hinreichend genau, um die Soll-Position exakt zu treffen. Nach Beginn der Korrekturbewegung wird eine zweite Richtungsinformation gewonnen, die eine höhere Genauigkeit hat. Indem die erste Richtungsinformation anhand der zweiten Richtungsinformation korrigiert wird, kann sichergestellt werden, dass das unbemannte Fluggerät mit der Korrekturbewegung präzise zur Soll-Position geleitet wird.

In einer bevorzugten Ausführungsform der Erfindung wird die Ist-Position des unbemannten Fluggeräts anhand eines GPS-Signals ermittelt. GPS bezeichnet ein System, bei dem zwischen dem unbemannten Fluggerät und einem oder mehreren Satelliten ein Signal ausgetauscht wird, wobei in vielen Fällen eine unidirektionale Datenübertragung von dem Satelliten zu einem GPS-Empfänger für die Positionsermittlung ausreicht. Es kann die Signallaufzeit zwischen dem unbemannten Fluggerät und dem jeweiligen Satelliten betrachtet werden, um die Positionsinformation für das unbemannte Fluggerät zu gewinnen. Die Bezeichnung GPS wird in der vorliegenden Patentanmeldung als Gattungsbezeichnung verwendet und ist nicht als Einschränkung auf einen bestimmten kommerziellen Anbieter oder einen bestimmten Satz von Satelliten zu verstehen.

Durch Differenzbildung zwischen der Ist-Position und der Soll-Position kann ermittelt werden, ob eine Abweichung vorliegt, die eine Korrekturbewegung erfordert. Aus der Differenzbildung kann auch eine absolute Richtungsinformation zwischen der Ist-Position und der Soll-Position abgeleitet werden. Damit ist bekannt, in welche Richtung das unbemannte Fluggerät sich für eine Annäherung an die Soll-Position bewegen müsste. Allerdings kann dies nicht unmittelbar in einen Steuerbefehl für das unbemannte Fluggerät umgesetzt werden, weil die momentane Ausrichtung des unbemannten Fluggeräts relativ zu der absoluten Richtung nicht zwangsläufig bekannt ist.

Bei der ersten Richtungsinformation kann es sich um eine magnetisch gewonnene Richtungsinformation handeln. Als magnetisch gewonnene Richtungsinformation wird insbesondere eine aus dem Magnetfeld der Erde abgeleitete Richtungsinformation bezeichnet. Die magnetische Richtungsinformation kann beispielsweise mithilfe eines an Bord des unbemannten Fluggeräts vorgesehenen Kompasses ermittelt werden. Die magnetische Richtungsinformation kann herangezogen werden, um ausgehend von der Ist-Position eine Richtung für den Beginn der Korrekturbewegung zu ermitteln. Die magnetische Richtungsinformation ist zwar unabhängig von einer Bewegung des unbemannten Fluggeräts verfügbar, allerdings ist die magnetische Richtungsinformation in vielen Fällen nicht präzise genug, um das unbemannte Fluggerät exakt zu der Soll-Position hin zu bewegen.

Mit dem Beginn der Korrekturbewegung tritt eine Positionsänderung des unbemannten Fluggeräts ein. Das erfindungsgemäße Verfahren kann so durchgeführt werden, dass die zweite Richtungsinformation aus der Positionsänderung abgeleitet wird. Die Positionsänderung kann dabei anhand des GPS-Signals ermittelt werden.

Es wird also bei dieser Ausführungsform die magnetisch gewonnene Richtungsinformation genutzt, um das unbemannte Fluggerät schon zu Beginn der Korrekturbewegung grob in die richtige Bewegungsrichtung zu leiten und diese Bewegungsrichtung im weiteren Verlauf der Korrekturbewegung anhand der neu hinzugewonnenen Informationen anzupassen.

Die Genauigkeit einer aus einer Positionsänderung abgeleiteten Richtungsinformation wird desto höher, je größer die Positionsänderung ist. Bei dem erfindungsgemäßen Verfahren kann ein Schwellwert für die mit der Korrekturbewegung zurückgelegte Distanz festgelegt werden, so dass die Richtungskorrektur nicht durchgeführt wird, bevor die Distanz den Schwellwert überschritten hat.

Bei dem erfindungsgemäßen Verfahren kann die zweite Richtungsinformation im Laufe der Korrekturbewegung mehrfach neu ermittelt werden. Weicht die neu ermittelte zweite Richtungsinformation von der bisherigen zweiten Richtungsinformation ab, so kann die bisherige Richtungsinformation anhand der neu ermittelten Richtungsposition korrigiert werden bzw. durch diese ersetzt werden. Damit wird es möglich Störeinflüsse, die beispielsweise durch Wind oder durch Sensorrauschen hervorgerufen werden, im Laufe der Korrekturbewegung auszugleichen.

Die Richtungskorrektur kann so durchgeführt werden, dass zu einem bestimmten Zeitpunkt die erste Richtungsinformation durch die zweite Richtungsinformation ersetzt wird. Bei dieser Vorgehensweise ist es möglich, dass die Richtungskorrektur zu einem abrupten Wechsel der Bewegungsrichtung des unbemannten Fluggeräts führt. Alternativ kann deswegen ein gleitender Übergang von der ersten Richtungsinformation zu der zweiten Richtungsinformation vorgesehen sein. Dies kann beispielsweise durch einen Gewichtungsfaktor für die zweite Richtungsinformation erreicht werden, die ab einem vorgegebenen Zeitpunkt mit der Zeit kontinuierlich ansteigt. Am Ende der Korrekturbewegung kann die zweite Richtungsinformation die erste Richtungsinformation vollständig ersetzt haben.

Die Genauigkeit einer aus einer Positionsänderung abgeleiteten Richtungsinformation steigt mit der Länge der zurückgelegten Strecke. Ist die Abweichung zwischen der Ist-Position und der Soll-Position klein, so reicht die mit einer Korrekturbewegung zurückgelegte Strecke häufig nicht aus, um aus der Positionsänderung eine hinreichend genaue Richtungsinformation abzuleiten. Das Verfahren kann deswegen so durchgeführt werden, dass eine Korrektur einer ersten Richtungsinformation anhand einer zweiten Richtungsinformation nur dann durchgeführt wird, wenn die Distanz zwischen der Ist-Position und der Soll-Position größer ist als ein vorgegebener Schwellwert. Der Schwellwert kann beispielsweise bei 2 m, vorzugsweise bei 1 m, weiter vorzugsweise bei 0,5 m, weiter vorzugsweise bei 0,2 m liegen.

Ist die Distanz kleiner als der Schwellwert, so kann eine Korrekturbewegung anhand einer Richtungsinformation eingeleitet werden, die unabhängig von einer Positionsänderung des unbemannten Fluggeräts gewonnen wurde. Die Richtungsinformation kann auf dieselbe Weise oder auf andere Weise gewonnen werden wie die erste Richtungsinformation des erfindungsgemäßen Verfahrens. Mit der Korrekturbewegung kann das unbemannte Fluggerät an die Ist-Position angenähert werden, ohne dass eine Korrektur der Richtungsinformation vorgenommen wird.

Die Erfindung betrifft außerdem ein unbemanntes Fluggerät, das zum Durchführen des Verfahrens geeignet ist. Das Fluggerät umfasst einen Richtungssensor, ein Rechenelement zum Ableiten einer zweiten Richtungsinformation aus einer Positionsänderung des Fluggeräts und mit einem Positioniermodul. Das Positioniermodul macht einer Steuereinheit des unbemannten Fluggeräts eine Richtungsvorgabe für eine Korrekturbewegung von einer Ist-Position zu einer Soll-Position, wobei die Korrekturbewegung anhand der mit dem Richtungssensor gewonnenen ersten Richtungsinformation ausgelöst wird und wobei die Richtungsvorgabe nach Beginn der Korrekturbewegung anhand der zweiten Richtungsinformation korrigiert wird. Der Richtungssensor kann ein magnetischer Kompass sein.

Das Fluggerät kann mit weiteren Merkmalen fortgebildet werden, die im Zusammenhang des erfindungsgemäßen Verfahrens beschrieben sind. Das Verfahren kann mit weiteren Merkmale fortgebildet werden, die im Zusammenhang des unbemannten Fluggeräts beschrieben sind.

Die Erfindung wird nachfolgend unter Bezugnahme auf die beigefügten Zeichnungen anhand vorteilhafter Ausführungsformen beispielhaft beschrieben. Es zeigen:
Fig. 1: ein unbemanntes Fluggerät gemäß der Erfindung;
Fig. 2: eine schematische Darstellung einer Korrekturbewegung des unbemannten Fluggeräts; und
Fig. 3: eine schematische Darstellung von Komponenten des unbemannten Fluggeräts.

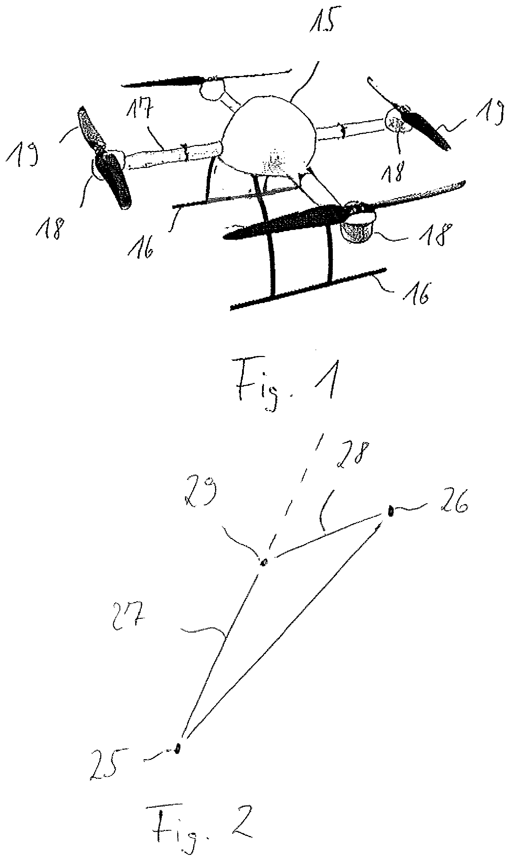

Ein in Fig. 1 gezeigtes unbemanntes Fluggerät umfasst einen Rumpfkörper 15 mit Kufen 16, auf denen das Fluggerät steht, wenn es am Boden ist. Von dem Rumpfkörper 15 erstrecken sich vier Tragstreben 17 nach außen. Am äußeren Ende jeder Tragstrebe 17 ist ein Antriebsmotor 18 zum Antrieb eines Rotors 19 angeordnet. Zum Start werden die Rotoren 19 in gegenläufige Drehung versetzt, so dass das Fluggerät senkrecht nach oben abhebt. Durch geeignete Ansteuerung der Antriebsmotoren 18 kann das Fluggerät gezielt entlang gewünschter Flugbahnen gesteuert werden.

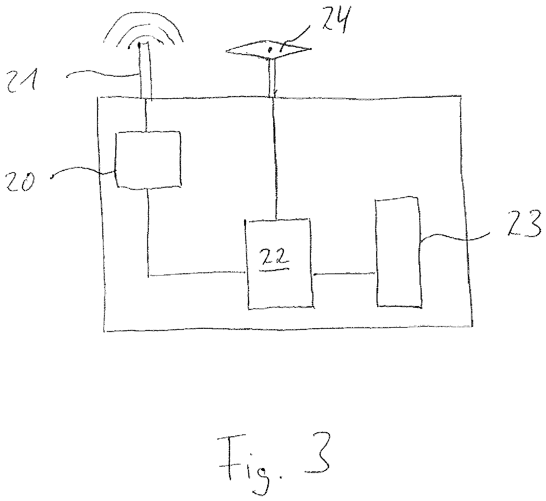

Das unbemannte Fluggerät umfasst gemäß Fig. 3 ein GPS-Modul 20, das über eine Antenne 21 GPS-Signale von einer Mehrzahl von Satelliten empfängt. Eine Information über die aktuelle Position des unbemannten Fluggeräts wird zu einem Positioniermodul 22 geleitet, das durch Differenzbildung zwischen der aktuellen Position (Ist-Position) und einer zuvor eingegebenen gewünschten Position (Soll-Position) ermittelt, wie groß der gegenwärtige Abstand zwischen der Ist-Position und der Soll-Position ist. Stellt das Positioniermodul eine Abweichung fest, so wird mit dem Positioniermodul 22 eine Korrekturbewegung ausgelöst mit dem Ziel, das unbemannte Fluggerät zurück in seine Soll-Position zu bringen. Von dem Positioniermodul 22 wird zu diesem Zweck ein Steuerbefehl an eine Steuereinheit 23 geleitet. Von der Steuereinheit 23 werden die Antriebsmotoren des unbemannten Fluggeräts in der gewünschten Weise angesteuert.

Insbesondere wird von dem Positioniermodul 22 eine Information an die Steuereinheit 23 übermittelt, in welche Richtung die Korrekturbewegung führen soll. Dabei ist die absolute Richtung für die Korrekturbewegung aus der Differenzbildung zwischen der Ist-Position und der Soll-Position bekannt. Allerdings kann die absolute Richtungsinformation nicht ohne weiteres in einen Steuerbefehl für die Steuereinheit 23 umgesetzt werden, weil die momentane Ausrichtung des unbemannten Fluggeräts relativ zu der Bewegungsrichtung aus einer einzelnen mit dem GPS-Signal ermittelten Position nicht abgeleitet werden kann.

Das Positioniermodul 22 ist zusätzlich mit einem Kompass 24 verbunden, von dem das Positioniermodul 22 eine Information über die momentane Ausrichtung des unbemannten Fluggeräts relativ zum Magnetfeld der Erde erhält. Die Richtungsinformation von dem Kompass 24 bildet eine erste Richtungsinformation im Sinne der Erfindung, aus der das Positioniermodul 22 einen Steuerbefehl ableitet, in welche Richtung die Korrekturbewegung begonnen wird.

Solange die Distanz zwischen der Ist-Position 25 und der Soll-Position 26 kleiner ist als ein vorgegebener Schwellwert von beispielsweise 0,5 m wird ausschließlich die mit dem Kompass 24 gewonnene erste Richtungsinformation verwendet, um das unbemannte Fluggerät zu der Soll-Position 26 zu führen. Das erfindungsgemäße Verfahren, bei dem die erste Richtungsinformation anhand einer zweiten Richtungsinformation korrigiert wird, wird nur dann begonnen, wenn die Distanz zwischen der Ist-Position 25 und der Soll-Position 26 größer ist als der Schwellwert. Die Korrektur der Richtungsinformation kann im weiteren Verlauf iterativ fortgesetzt werden, auch wenn die Distanz zwischen der Ist-Position 25 und der Soll-Position 26 während der Korrekturbewegung kleiner wird als der Schwellwert.

Wie in Fig. 2 dargestellt entspricht die von dem Kompass 24 erhaltene erste Richtungsinformation 27 nicht immer exakt der Richtung zwischen der Ist-Position 25 und der Soll-Position 26 des unbemannten Fluggeräts. Eine Korrekturbewegung, die einfach der ersten Richtungsinformation 27 folgt, würde das unbemannte Fluggerät also an der Soll-Position 26 vorbei leiten. Das Positioniermodul 22 würde zu einem gegebenen Zeitpunkt feststellen, dass der Abstand zwischen der Ist-Position und der Soll-Position 26 sich wieder vergrößert und einen entgegengesetzten Steuerbefehl an die Steuereinheit 23 senden. Es besteht die Gefahr, dass das unbemannte Fluggerät durch immer extremer werdende Steuerbefehle außer Kontrolle geraten kann.

Nach dem Beginn der Korrekturbewegung stellt das Positioniermodul 22fest, dass die Position des unbemannten Fluggeräts sich ändert. Aus der Positionsänderung leitet das Positioniermodul 22 eine zweite Richtungsinformation 28 ab über die Richtung zwischen der aktuellen Ist-Position und der Soll-Position. Die aus der Positionsänderung abgeleitete zweite Richtungsinformation 28 hat im Allgemeinen eine höhere Präzision als die mit dem Kompass 24 gewonnene erste Richtungsinformation 27.

Gemäß Fig. 2 kann zu einem Zeitpunkt 29, der nach dem Beginn der Korrekturbewegung liegt, eine Korrektur der ersten Richtungsinformation 27 vorgenommen werden, so dass das unbemannte Fluggerät sich in einem zweiten Teil der Korrekturbewegung gemäß der zweiten Richtungsinformation 28 exakt in Richtung der Soll-Position bewegt. Die zweite Richtungsinformation kann im Verlauf der Korrekturbewegung immer wieder neu ermittelt werden, so dass gegebenenfalls eine Anpassung der zweiten Richtungsinformation vorgenommen werden kann.

Mit dem erfindungsgemäßen Verfahren wird also ein zweistufiger Ablauf für die Korrekturbewegung in Richtung der Soll-Position 26 vorgestellt. Auf einer ersten Stufe wird die Richtungsvorgabe für die Korrekturbewegung aus einer möglicherweise weniger genauen, aber dafür immer verfügbaren ersten Richtungsinformation 27 abgeleitet, die von dem Kompass 24 gewonnen wird. Auf der zweiten Stufe wird die erste Richtungsinformation 27 korrigiert anhand der aus der Positionsänderung abgeleiteten zweiten Richtungsinformation 28, die eine höhere Genauigkeit aufweist.

## Patentansprüche

1. Unbemanntes Fluggerät mit einem Richtungssensor (24), einem Rechenelement zum Ableiten einer zweiten Richtungsinformation aus einer Positionsänderung des unbemannten Fluggeräts und mit einem Positioniermodul (22), das einer Steuereinheit (23) des unbemannten Fluggeräts eine Richtungsvorgabe für eine Korrekturbewegung von einer Ist-Position (25) zu einer Soll-Position (26) macht, wobei die Korrekturbewegung anhand der mit dem Richtungssensor (24) gewonnenen ersten Richtungsinformation (27) ausgelöst wird, **dadurch gekennzeichnet, dass** die Richtungsvorgabe nach Beginn der Korrekturbewegung anhand der zweiten Richtungsinformation (28) korrigiert wird, wobei die erste Richtungsinformation (27) unabhängig von einer Positionsänderung des unbemannten Fluggeräts gewonnen wird.

2. Unbemanntes Fluggerät nach Anspruch 1, **dadurch gekennzeichnet, dass** der Richtungssensor (24) ein magnetischer Kompass ist.

3. Unbemanntes Fluggerät nach einem der Ansprüche 1 oder 2, **dadurch gekennzeichnet, dass** die Ist-Position (25) des Fluggeräts anhand eines GPS-Signals ermittelt wird.

4. Unbemanntes Fluggerät nach einem der Ansprüche 1-3, **dadurch gekennzeichnet, dass** durch Differenzbildung zwischen der Ist-Position (25) und der Soll-Position (26) ermittelt wird, ob eine Korrekturbewegung erforderlich ist.

5. Unbemanntes Fluggerät nach einem der Ansprüche 1 bis 4, **dadurch gekennzeichnet, dass** die erste Richtungsinformation (27) eine magnetisch gewonnene Richtungsinformation (28) ist.

6. Unbemanntes Fluggerät nach einem der Ansprüche 1 bis 5, **dadurch gekennzeichnet, dass** die zweite Richtungsinformation (28) aus einer Positionsänderung abgeleitet wird.

7. Unbemanntes Fluggerät nach einem der Ansprüche 1 bis 6, **dadurch gekennzeichnet, dass** die zweite Richtungsinformation (28) aus einem GPS-Signal abgeleitet wird.

8. Unbemanntes Fluggerät nach einem der Ansprüche 1 bis 7, **dadurch gekennzeichnet, dass** am Ende der Korrekturbewegung die erste Richtungsinformation (27) vollständig durch die zweite Richtungsinformation (28) abgelöst ist.

9. Unbemanntes Fluggerät nach Anspruch 8, **dadurch gekennzeichnet, dass** die Korrekturbewegung mit einem gleitenden Übergang zwischen der ersten Richtungsinformation (27) und der zweiten Richtungsinformation (28) vollzogen wird.

10. Unbemanntes Fluggerät nach einem der Ansprüche 1 bis 9, **dadurch gekennzeichnet, dass** eine Korrektur einer ersten Richtungsinformation (27) anhand einer zweiten Richtungsinformation (28) nur dann vorgenommen wird, wenn zu Beginn der Korrekturbewegung die Distanz zwischen der Ist-Position (25) und der Soll-Position (26) größer ist als ein vorgegebener Schwellwert.

11. Unbemanntes Fluggerät nach Anspruch 10, **dadurch gekennzeichnet, dass** der Schwellwert bei 2 m liegt.

12. Unbemanntes Fluggerät nach Anspruch 10 oder 11, **dadurch gekennzeichnet, dass** bei einer Abweichung zwischen der Ist-Position (25) und der Soll-Position (26), die kleiner ist als der Schwellwert eine Korrekturbewegung anhand einer Richtungsinformation durchgeführt wird, die unabhängig von einer Positionsänderung des unbemannten Fluggeräts ist.

13. Verfahren zum Positionieren eines unbemannten Fluggeräts, bei dem die Ist-Position (25) des Fluggeräts von einer Soll-Position (26) abweicht und bei dem das Fluggerät anhand einer ersten Richtungsinformation (27) in Richtung der Soll-Position (26) in eine Korrekturbewegung versetzt wird, wobei die Korrekturbewegung durch einen Steuerbefehl ausgelöst wird, der von einem Positioniermodul (22) des Fluggeräts zu einer Steuereinheit (23) des Fluggeräts geleitet wird, **dadurch gekennzeichnet, dass** nach Beginn der Korrekturbewegung eine zweite Richtungsinformation (28) aus einer Positionsänderung des unbemannten Fluggeräts gewonnen wird und wobei die erste Richtungsinformation (27) anhand der zweiten Richtungsinformation (28) korrigiert wird, wobei die erste Richtungsinformation (27) unabhängig von einer Positionsänderung des unbemannten Fluggeräts gewonnen wird.

## Claims

1. Unmanned aerial vehicle having a direction sensor (24), a computation element for deriving a second piece of directional information from a change of position of the unmanned aerial vehicle and having a positioning module (22) that provides a control unit (23) of the unmanned aerial vehicle with a directional guideline for a corrective motion from an actual position (25) to a desired position (26), wherein the corrective motion is triggered on the basis of the first piece of directional information (27) obtained using the direction sensor (24), **characterized in that** the directional guideline is corrected on the basis of the second piece of directional information (28) after the beginning of the corrective motion, wherein the first piece of directional information (27) is obtained independently of a change of position of the unmanned aerial vehicle.

2. Unmanned aerial vehicle according to Claim 1, **characterized in that** the direction sensor (24) is a magnetic compass.

3. Unmanned aerial vehicle according to either of Claims 1 and 2, **characterized in that** the actual position (25) of the aerial vehicle is ascertained on the basis of a GPS signal.

4. Unmanned aerial vehicle according to one of Claims 1-3, **characterized in that** forming the difference between the actual position (25) and the desired position (26) ascertains whether a corrective motion is required.

5. Unmanned aerial vehicle according to one of Claims 1 to 4, **characterized in that** the first piece of directional information (27) is a magnetically obtained piece of directional information (28).

6. Unmanned aerial vehicle according to one of Claims 1 to 5, **characterized in that** the second piece of directional information (28) is derived from a change of position.

7. Unmanned aerial vehicle according to one of Claims 1 to 6, **characterized in that** the second piece of directional information (28) is derived from a GPS signal.

8. Unmanned aerial vehicle according to one of Claims 1 to 7, **characterized in that** at the end of the corrective motion the first piece of directional information (27) is completely superseded by the second piece of directional information (28).

9. Unmanned aerial vehicle according to Claim 8, **characterized in that** the corrective motion is executed with a gradual transition between the first piece of directional information (27) and the second piece of directional information (28).

10. Unmanned aerial vehicle according to one of Claims 1 to 9, **characterized in that** a correction to a first piece of directional information (27) on the basis of a second piece of directional information (28) is made only if at the beginning of the corrective motion the distance between the actual position (25) and the desired position (26) is greater than a prescribed threshold value.

11. Unmanned aerial vehicle according to Claim 10, **characterized in that** the threshold value is 2 m.

12. Unmanned aerial vehicle according to Claim 10 or 11, **characterized in that** in the event of a discrepancy between the actual position (25) and the desired position (26) that is less than the threshold value a corrective motion is performed on the basis of a piece of directional information that is independent of a change of position of the unmanned aerial vehicle.

13. Method for positioning an unmanned aerial vehicle, in which the actual position (25) of the aerial vehicle differs from a desired position (26) and in which the aerial vehicle is set in a corrective motion in the direction of the desired position (26) on the basis of a first piece of directional information (27), wherein the corrective motion is triggered by a control command routed from a positioning module (22) of the aerial vehicle to a control unit (23) of the aerial vehicle, **characterized in that** after the beginning of the corrective motion a second piece of directional information (28) is obtained from a change of position of the unmanned aerial vehicle and wherein the first piece of directional information (27) is corrected on the basis of the second piece of directional information (28), wherein the first piece of directional information (27) is obtained independently of a change of position of the unmanned aerial vehicle.

## Revendications

1. Engin volant sans pilote comprenant un détecteur de direction (24), un élément calculateur destiné à dériver une deuxième information de direction à partir d'un changement de position de l'engin volant sans pilote et comprenant un module de positionnement (22), qui fait transformer une instruction de direction pour un mouvement de correction d'une position réelle (25) en une position de consigne (26) par une unité de commande (23) de l'engin volant sans pilote, le mouvement de correction étant déclenché à l'aide de la première information de direction (27) obtenue avec le détecteur de direction (24), **caractérisé en ce que** l'instruction de direction est corrigée après le début du mouvement de correction à l'aide de la deuxième information de direction (28), la première information de direction (27) étant obtenue indépendamment d'un changement de position de l'engin volant sans pilote.

2. Engin volant sans pilote selon la revendication 1, **caractérisé en ce que** le détecteur de direction (24) est une boussole magnétique.

3. Engin volant sans pilote selon l'une des revendications 1 ou 2, **caractérisé en ce que** la position réelle (25) de l'engin volant est déterminée à l'aide d'un signal GPS.

4. Engin volant sans pilote selon l'une des revendications 1 à 3, **caractérisé en ce que** la nécessité d'un mouvement de correction est déterminée par calcul de la différence entre la position réelle (25) et la position de consigne (26).

5. Engin volant sans pilote selon l'une des revendications 1 à 4, **caractérisé en ce que** la première information de direction (27) est une information de direction (28) acquise magnétiquement.

6. Engin volant sans pilote selon l'une des revendications 1 à 5, **caractérisé en ce que** la deuxième information de direction (28) est dérivée d'un changement de position.

7. Engin volant sans pilote selon l'une des revendications 1 à 6, **caractérisé en ce que** la deuxième information de direction (28) est dérivée d'un signal GPS.

8. Engin volant sans pilote selon l'une des revendications 1 à 7, **caractérisé en ce qu'**à la fin du mouvement de correction, la première information de direction (27) est entièrement remplacée par la deuxième information de direction (28).

9. Engin volant sans pilote selon la revendication 8, **caractérisé en ce que** le mouvement de correction est accompli avec une transition glissante entre la première information de direction (27) et la deuxième information de direction (28).

10. Engin volant sans pilote selon l'une des revendications 1 à 9, **caractérisé en ce qu'**une correction d'une première information de direction (27) à l'aide d'une deuxième information de direction (28) n'est effectuée que si au début du mouvement de correction, la distance entre la position réelle (25) et la position de consigne (26) est supérieure à une valeur de seuil prédéfinie.

11. Engin volant sans pilote selon la revendication 10, **caractérisé en ce que** la valeur de seuil est de l'ordre de 2 m.

12. Engin volant sans pilote selon la revendication 10 ou 11, **caractérisé en ce que** dans le cas d'un écart entre la position réelle (25) et la position de consigne (26) qui est inférieur à la valeur de seuil, un mouvement de correction est effectué à l'aide d'une information de direction qui est dépendante d'un changement de position de l'engin volant sans pilote.

13. Procédé de positionnement d'un engin volant sans pilote, avec lequel une position réelle (25) de l'engin volant diverge d'une position de consigne (26) et avec lequel l'engin volant est amené dans un mouvement de correction en direction de la position de consigne (26) à l'aide d'une première information de direction (27), le mouvement de correction étant déclenché par une instruction de commande qui est amenée d'un module de positionnement (22) de l'engin volant à une unité de commande (23) de l'engin volant, **caractérisé en ce qu'**après le début du mouvement de correction, une deuxième information de direction (28) est obtenue d'un changement de position de l'engin volant sans pilote et la première information de direction (27) étant corrigé à l'aide de la deuxième information de direction (28), la première information de direction (27) étant obtenue indépendamment d'un changement de position de l'engin volant sans pilote.
